Europäisches Patentamt

(19) European Patent Office   (11) Publication number:   **0 178 062**

Office européen des brevets   **A2**

(12)   # EUROPEAN PATENT APPLICATION

(21) Application number: **85306194.3**   (51) Int. Cl.⁴: **C 08 L  53/00, C 09 J  3/14**

(22) Date of filing: **02.09.85**

(30) Priority: **10.09.84 US 649249**

(43) Date of publication of application: **16.04.86 Bulletin 86/16**

(84) Designated Contracting States: **DE FR GB IT NL**

(71) Applicant: **UNIROYAL, INC., World Headquarters, Middlebury Connecticut 06749 (US)**

(72) Inventor: **Petersen, Henno A., 6 Orange Pippin Road Sandy Hook, Fairfield Connecticut 06482 (US)**

(74) Representative: **Harrison, Michael Robert et al, URQUHART-DYKES & LORD 11th Floor Tower House Merrion Way, Leeds LS2 8PB West Yorkshire (GB)**

(54) **Hot melt presssure sensitive thermoplastic elastomeric adhesive compositions.**

㉗   This invention relates to novel hot melt pressure sensitive adhesive compositions. More particularly, it relates to hot melt pressure sensitive adhesive compositions comprising blends of thermoplastic elastomeric polymers made from ethylene and propylene; tackifiers; and optionally other additives such as plasticizers, fillers, and stabilizers.

EP 0 178 062 A2

6025

## HOT MELT PRESSURE SENSITIVE THERMOPLASTIC ELASTOMERIC ADHESIVE COMPOSITIONS

### BACKGROUND OF THE DISCLOSURE

Field of the Invention

This invention relates to novel hot melt pressure sensitive adhesive compositions. More particularly, it relates to hot melt pressure sensitive adhesive compositions comprising blends of thermoplastic elastomeric polymers made from ethylene and propylene; tackifiers; and optionally other additives such as plasticizers, fillers, and stabilizers.

Background of the Invention

The class of adhesive materials known as hot melt pressure sensitive adhesives are characterized by several useful properties which make them of interest to many industries wherein it is desired to bond two surfaces together, these surfaces being either similar or dissimilar to each other, and of various geometries ranging from flat to complex shapes. Some examples include labels, tapes, containers for packaging, laminated articles for construction, decoration or other purposes, carpets and other floor or wall coverings, bookbindings, furniture, disposable sanitary products, and others.

The characteristic properties of hot melt pressure sensitive adhesives are that, first, they can be applied as a film or layer to the desired substrate in a condition of elevated temperature, typically above 100°C and more typically above 150°C. At these high temperatures the adhesive possesses a low viscosity and will flow freely so that it can be spread as a thin film. Second, there is no solvent present in the composition of the adhesive, so that problems of toxic vapors or fire hazards, are greatly minimized or completely eliminated. Third, when the adhesive film has cooled to ambient temperature, typically room temperature in the range 10°C to 40°C, it possesses tackiness which has a propensity to adhere to surfaces which contact it, hence the term pressure sensitive. The adhesive requires no additional heat or solvent or water to become activated, but merely pressure such as is typically applied by the hand, or a roller, clamp, or other simple method.

In practice, the adhesive film is usually protected by a release paper or other disposable cover, which can be easily removed immediately prior to use.

There is a continuing research effort in the art to find hot melt, pressure sensitive adhesives with enhanced strength properties concomitant with increased heat and moisture resistance.

## SUMMARY OF THE INVENTION

It has now been discovered that with adhesive compositions based on thermoplastic elastomers of ethylene and propylene, as described more fully below, improved combinations of high peel strength, resistance to shear, tackiness, and resistance to environmental stresses such as heat and moisture are unexpectedly obtained.

## DETAILED DESCRIPTION OF THE INVENTION

Thermoplastic elastomers useful for the purpose of this invention comprise crystalline polypropylene moieties and essentially amorphous elastomeric ethylene - propylene copolymer moieties. Hot melt pressure sensitives adhesives of various chemical compositions are known, however, such adhesives based on thermoplastic elastomers of ethylene and propylene are new.

One type of suitable composition for use in this invention is disclosed in U.S. Patent Re 30,405 and Re 31,508 (Fischer) which disclose thermoplastic elastomeric blends of polypropylene and ethylene-propylene elastomers known as EPM or EPDM. Other references teach a second type of composition suitable for use in this invention comprising thermoplastic elastomeric polymers having crystalline polypropylene sequences and essentially amorphous ethylene-propylene sequences such as British Patent 1,134,660 (Shell) and allowed U.S. Patent application Serial No. 372,461 (Matthews et al) filed April 29, 1982. The thermoplastic elastomers of the Matthews invention are prepared by sequential polymerization using a catalyst system of the kind described in United States patent 4,298,721, Borghi et al., Nov. 3, 1981, U.S. patent 4,107,414, Giannini et al. Aug. 15, 1978 or European Patent Application 0 012 397, Phillips Petroleum Co., June 25, 1980. All of the above citations are herein incorporated by reference.

The polymers of the Matthews reference are especially preferred and they may be characterized by the ratio of the absorption intensity in the infrared spectrum of the band at 11.88 microns to the band at 12.8 microns of more than 7.0; the ratio of the intensity in the Raman spectrum of the band at 810 $cm^{-1}$ to the band at 840 $cm^{-1}$ of more than 1.0; the ratio of the intensity in the Raman spectrum of the band at 2880 $cm^{-1}$ to the band at 2850 $cm^{-1}$ of more than 2.0. Usually such polymers have a propylene content of 60-95% and a ratio of polypropylene sequences to ethylene-propylene sequences of 10/90 - 75/25, all by weight. Such polymers may further be characterized by a flexural modulus of less than 100,000 psi (689.5 MPa) at 23°C, an elongation at break of at least 150% and a melting point of at least 150°C as measured by differential thermal analysis. Generally, 30-70% by weight of such polymers may be extractable by submersion in boiling hexane.

The Matthews polymerization is typically conducted at a temperature of from 20° to 80°C or even higher, for the propylene step and from -10° to 80°C for the ethylene-propylene step. The preferred procedure is to heat the polymerization system to 55°C and begin the polymerization keeping the temperature below 77°C. The second step, the copolymerization of ethylene and propylene, is usually carried out between 60° and 77°C and the third step, if present, is usually kept between 60° and 77°C.

The first polymerization step can require as little as 10 to 25 minutes, the second step as little as 15 to 45 minutes, and the last step, if present, as little as from 10 to 25 minutes. Of course, longer times are also possible. The precise reaction time will depend on such variables as the reaction temperature pressure, the heat transfer rate, etc.

The polymerization is preferably carried out in organic solvent such as a hydrocarbon fraction (boiling, for example, between 30° and 60°C), such as hexane. Other solvents such as heptane, octane, or higher alkanes can be used. Aromatic hydrocarbons can also be used, benzene and toluene being two examples. The polymers produced are only partially soluble in the solvent, thus giving one a slurry type polymerization. The solvent is "inert" in the sense that it does not adversely interfere with the catalyst or the polymerization reaction. An excess of propylene over and above the propylene which takes part in the polymerization, can serve as the reaction medium; isobutylene is another example of a suitable reaction medium.

The fact that the polymers are not completely soluble in the solvent system allows one to run at high solids concentration since the viscosity of the reaction medium is low for a given solids content thus helping to facilitate heat transfer to keep the exothermic polymerization under control. The polymerization gives rise to a small particle type slurry (easily dispersed) so that handling problems are facilitated and transfer of the reaction mixture from the reactor to finishing equipment is easily accomplished.

The work-up of the polymer involves addition of a short-stop; addition of antioxidants, steam-floccing, or vacuum drum drying, as in conventional practice. The efficiencies of polymerization (20,000 to 100,000 g polymer/g of titanium) make a washing step unnecessary unless it is desired to minimize aluminum residues. If necessary, a washing step can be instituted. The crumb obtained can be dried and diced for use in injection molding or prepared in other forms such as flakes by using conventional commercial equipment. Oil extension will give rise to soft polymers with excellent tensile to hardness ratios.

The example below illustrates the preparation of a catalyst and the preparation of a Matthews type thermoplastic elastomeric polymer.


A)   Preparation of Ti Complex

An apparatus consisting of a one liter 3-necked flask, a mechanical stirrer, an addition funnel, a thermometer, and a reflux condenser which had been oven dried at 110°C was equipped with an adapter at the top of the condenser to keep the apparatus under a $N_2$ stream. The $N_2$ exited through a bubbler containing a small amount of oil. Heptane (450 ml) and $TiCl_4$ (48 ml, 82.8 g, .436 moles) were added under $N_2$ and after heating to 65°C, the dropwise addition of a solution of 52 ml (54.7 g, .364 moles) of ethylbenzoate in 50 ml of heptane was begun. After the addition was complete, the reaction mixture was stirred for 1 hour. The heptane was stripped off under vacuum and the solid complex which fumes in air was put in a taped bottle in the $N_2$ glove box. The complex appears to be active indefinitely in the absence of air.


B)   Formation of supported Catalyst Complex

An oven dried polypropylene wide mouthed bottle containing ceramic balls was half-filled with a mixture of 4 parts of anhydrous $MgCl_2$ for every 1 part of catalyst complex under $N_2$. The self-locking cover was taped to further protect the contents and the bottle put in a vibrating ball mill for at least 15 hours and usually 30 hours. The supported complex was separated from the ceramic balls in a glove box and stored until needed. The dry complex appears to be stable at least for 3-5 months. When it is dispersed in solvent it begins to lose activity after about 4 days. One gram of the complex contains 28 mg of titanium.

C)  Formation of Cocatalyst Complex

The 25% Et₃Al (1.6 M) was reacted in hexane or heptane with the required amount of ethyl anisate (10-40 mole %), keeping the temperature below 50°C.  The clear yellow solution was aged for ½ hour before adding to the polymerizing medium.  Ethyl p-t-butyl benzoate can be used in place of ethyl anisate.  Leaving out the modifiers can give rise to high yields of low molecular weight polymers with lower tensile values.

D)  Polymer Preparation

In a 20 gallon jacketed pressure reactor equipped with a sealed mechnical stirrer were added 40 Kg of hexane followed by 4 Kg of propylene.  The contents were heated to 130°F.  Aged cocatalyst was then added consisting of 250 ml of 1.6 M.  Et₃Al (400 millimoles) diluted with 400 ml of hexane and reacted with 16.7 g ethyl p-t-butyl benzoate (EPTBB) (equivalent to 86.4 millimoles of ester) to give a mole ratio of 0.216 of ester of AlEt₃.  The solution of cocatalyst had been aged ½ hour before addition to reactor.

Addition of 6.4 g (180 mg Ti) of supported catalyst dispersed in hexane initiated the reaction and propylene was fed in to maintain the pressure at 50 psig.  A regulator valve was used to control the pressure.  The temperature rose from 130°F to 142°F even with cooling on.  After 15 minutes the propylene feed was turned off and CP ethylene fed rapidly till 400 g of ethylene had been introduced.  The pressure at this point was 55.2 psig.  Ethylene and propylene at a 1 to 1 molar ratio were fed in to maintain this pressure.  With the introduction of E/P, the temperature climbed to 175°F even with full cooling.  After 45 minutes the temperature was 148°F.  The monomer feeds were turned off and the reaction mixture was dumped, the reactor was rinsed with hexane, the rinse was added to the dump and the total short-stopped with 100 g isopropyl alcohol.  At this point 40 g of antioxidant was added with mechanical stirring and the polymer suspension was steam-flocced to recover the crumb.  Drying and massing on a mill to give homogeneous product gave a yield of 7730 g (efficiency = 42,944 g polymer per gram of titanium).

| TYPE | P/EP | BROOKFIELD | 465 |
|---|---|---|---|
| COCATALYST | Et$_3$Al/EpTBB | % ETHYLENE | 15 |
| m mole/m mole | 400/86 | $[n]^{135}$ | 2.63 |
| CATALYST (mgTi) | 180 | % CRYST.(X-RAY) | 45 |
| TIME (MIN.) | 15/45 | Tg (C°) | -48 |
| YIELD (g.) | 7730 | Tm (C°) | 154 |
| EFFICIENCY | 42,944 | % UTIL. OF E. | 90 |
| ML-4 @ 257 | 48-38 | % UTIL. of P. | 75 |

The ethylene-propylene thermoplastic elastomer may comprise from 5% to 85% by weight of the total adhesive composition with 10% to 50% being preferred, and 15% to 40% being most preferred.

The tackifiers which are suitable for use in the practice of the invention can be of several types such as, but not limited to: natural or synthetic polyterpenes, and hydrocarbon and modified hydrocarbon resins derived from low molecular weight products of petroleum, coal or pine trees. Examples of such tackifiers are those produced from light, so-called C-5 fractions of petroleum, whose principal monomers are cis- and trans-piperylene, but can also contain minor amounts of other monomers. Typically such tackifiers are characterized by specific gravities of 0.9 to 1.0, and ring-and-ball softening points of 80°C to 120°C although semi-liquid resins with softening points as low as 10°C are also suitable.

Other examples of tackifiers useful in the practice of the invention are mixtures of aliphatic and aromatic hydrocarbons, so-called C-5/C-9 hybrid resins, these being items of commerce and typically having specific gravities of 0.95 to 1.00, and softening points of 90°C to 105°C.

The amounts of tackifiers which are suitable in the adhesive composition are 5% to 85% by weight of the total adhesive composition, with 20% to 60% being preferred, and 30% to 50% being most preferred.

It is an essential feature of the invention that the ethylene-propylene thermoplastic elastomer and the tackifier are compatible with each other, so that upon being mixed in the hot melt state, one obtains a blend which has the suitable properties of tackiness, adhesive strength, and cohesive strength which characterize a pressure sensitive adhesive. Either the thermoplastic elastomer alone, or the tackifier alone, does not make a useful hot melt pressure sensitive adhesive.

The plasticizers which are optionally additives in the composition of the hot melt pressure sensitive adhesives described herein include liquid hydrocarbon oils of paraffinic, naphthenic, or aromatic types, or mixtures thereof. They also include solid or semi-solid hydrocarbons of low to medium molecular weight. Examples of such oils and hydrocarbons are: Paraffinic type colorless mineral oils having molecular weights of 300 to 500, viscosities of 10 to 120 cst at 100°F (38°C), and specific gravities of 0.8 to 0.9, and amorphous polypropylene having a ring-and-ball softening point of 300° to 310°F (149 - 154°C), specific gravity of 0.84 to 0.88, and viscosity 500-2500 cps at 375°F (191°C).

These plasticizers, when incorporated into the composition of the hot melt pressure sensitive adhesive, lower the viscosity of the composition and thus aid the various processing operations which are involved in mixing and spreading of the adhesive film on to a substrate. They also impart softness and therefore enhanced tackiness to the adhesive film.

The amounts of plasticizers which can be advantageously used herein are 5% to 50% by weight of the total adhesive, with 15% to 40% being preferred, and 25% to 35% being most preferred.

The fillers which are optionally additives in the composition of this invention include, but are not limited to, such commercially available particulate substances as clays, talc, calcium carbonate, silica, carbon black, gypsum, mica or mixtures thereof. They also include reprocessed, reprecipitated or modified particulates such as processed mineral fiber and Franklin fiber. The effects of these fillers on the tackiness and adhesive properties of the hot melt pressure sensitive adhesives are minor, and the fillers can be omitted without sacrificing any desirable adhesive qualities. They can be included, however, to impart such modifications of the composition as color, viscosity, and reduction of materials cost.

Fillers may be added in the amount of 5 parts to 150 parts by weight per 100 parts of total unfilled adhesive composition and more preferably 20 parts to 100 parts, and most preferably 40 parts to 80 parts by weight.

Stabilizers which are suitable to be included in the composition of the adhesives encompass a wide variety of commonly available antioxidants, antiozonants, and thermal stabilizers which are recommended by their manufacturers for use in hydrocarbon polymers. Some examples are amine types, phenolic types, sulfides, phenyl alkanes, phosphites, etc. Such stabilizers are added in amounts ranging from 0.1% to 2.0% by weight of the total adhesive, preferably 0.2% to 1.5%, and most preferably 0.5% to 1.0% by weight. These stabilizers help to retard degradation of the various components of the adhesive blend via heat, ultraviolet light, or ozone, especially upon long term exposure to such agents.

The adhesive compositions of this invention are prepared by mixing together the ingredients described above, in the proportions given, under conditions of elevated temperature and mechanical agitation. Typically, the temperature of mixing is 175°C to 210°C, and this assures that the ethylene-propylene thermoplastic elastomer and resin tackifier are in the melted state. Mixing is accomplished in a heated vessel equipped with stirrer, or a two-roll heated open mill, or other suitable equipment, and is continued until a homogeneous blend is obtained. Typical mixing times are 5 to 15 minutes at temperature, measured from that time all ingredients have been added.

The completed adhesive blend can be applied to a substrate directly upon being removed from the mixing apparatus, while it is still in the hot melt state. Any method which will spread the hot melt adhesive in a uniform thin film is suitable, and this includes manual or automatic blades, bars, or spatulas, roll type coaters, and the like.

Alternatively, the adhesive can be cooled and stored until needed for use, and then subsequently reheated to the melt state, typically above 150°C and more suitably 175°C to 210°C, and then applied to a desired substrate.

Typical thickness of the adhesive layer which is effective for pressure sensitive application is 0.5 mil to 20 mil, (0.0127 - 0.51 mm) and more preferably 1.0 mil to 5.0 mil (0.025 - 0.127 mm).

The following examples are given for purposes of illustration, and this invention is not limited thereto.

## EXAMPLE 1

Ethylene-propylene thermoplastic elastomer (TPE), cyclic hydrocarbon hydrogenated resin, paraffinic mineral oil, amorphous polypropylene, and antioxidant were mixed together on a eated two-roll mill at 175°C for 10 minutes, in the proportions shown in Table 1. The adhesives were applied as thin films on polyester (Mylar[R]) backing immediately from the mill, while still in the melted state, manually with a heated spatula. These samples were then allowed to cool to room temperature and conditioned for a minimum of 4 hours at 24°C. Subsequently a second piece of Mylar sheet, not coated with adhesive, was contacted to the first coated piece, and pressure was applied with a standard $4\frac{1}{2}$ lb. (2.05kg) roller. The samples for peel testing were 1 inch wide (2.54 cm) by 6 inches (15.24 cm) long, and samples for shear testing were 1 inch wide (2.54 cm) with a 1 inch (2.54 cm) overlap. Additional samples for rolling back tack testing were 2 inches (5.08 cm) wide by 15 inches (38.1 cm) long.

Peel tests were done at room temperature at a speed of 2 inches (5.08 cm) per minute on an Instron tensile tester, and the maximum force required to separate the sample was recorded. Shear tests were done on a Pressure Sensitive Tape Council shear test apparatus, using their PSTC-7 procedure and standard 1 kg. weight. Rolling ball tack was measured with a rolling ball test apparatus obtained from the Pressure Sensitive Tape Council, using their PSTC-6 procedure. The results of these tests are shown in Table I.

Table 1

|  | A | B | C | D | E |
|---|---|---|---|---|---|
| TPE | 3.8 | 11.8 | 19.0 | 30.4 | 57.0 |
| Tackifier Resin | 57.0 | 49.4 | 41.8 | 30.4 | 3.8 |
| Oil | 19.0 | 19.0 | 19.0 | 19.0 | 19.0 |
| Amorphous Polypropylene | 19.0 | 19.0 | 19.0 | 19.0 | 19.0 |
| Antioxidant | 1.2 | 1.2 | 1.2 | 1.2 | 1.2 |

Compositions given in per cent weight.

| Peel Strength, lbs. | 21 | 36 | 21 | 4 | 0 |
|---|---|---|---|---|---|
| Shear Strength |  |  |  |  |  |
| Hours | 2.6 | 24 | 24 | 24 | 0 |
| Percent Slippage | 100 | 0 | 0 | 0 | 100 |
| Rolling Ball Tack, inch | 15 | 15 | 6.5 | 0.7 | 15 |

TPE
Ethylene/propylene weight ratio = 36/64
Flexural modules at R.T. = 2500 psi (17.24 MPa)
Elongation = 500%
Melting Point - 154°C
Raman and infrared spectra within range described above.

Tackifier
Hydrogenated cyclic hydrocarbon resin
Softening point (ring and ball) = 120°C
Specific gravity = 0.98

Oil
Paraffinic mineral oil; molecular weight = 530;
Viscosity = 102 cst at 38°C;
Specific gravity = 0.8745

Amorphous Polypropylene
Softening point (ring and ball) = 305°F (152°C);
Specific gravity = 0.863

Antioxidant
Equal parts by weight of tetrakis (methylene (3,5-di-t-butyl-4-hydroxyhydrocinnamate) methane and 2,2,6,6-tetramethylate-4-piperidyl sebacate (u.v. stabilizer).

The results in Table I illustrate the effects of the levels of ethylene-propylene thermoplastic elastomer and resin tackifier on the properties of the adhesive. Compositions B, C and D fall within the preferred range of the invention, and these give the best combinations of high peel strength, good resistance to shear (no failure in 24 hours, the maximum testing time), and high tackiness (low rolling distance).

Composition A is outside the scope of the invention, and has poor shear strength. Composition E is likewise outside the scope of the invention, and has no measurable peel strength or shear strength.

### EXAMPLE 2

Several different thermoplastic elastomers and an ethylene-propylene rubber were used in a hot melt pressure sensitive adhesive recipe whose proportions fall within those of the invention, being in the most preferred range of composition. These materials were: a. An ethylene-propylene thermoplastic elastomer which is described above, and Composition A in Table II is therefore a most preferred embodiment of this invention. b. and c.: Commercially available thermoplastic rubber copolymers of styrene-isoprene and styrene-ethylene-butylene, which are known in the art as being useful components of other hot melt pressure sensitive adhesives. d: Ethylene-propylene rubber, being an elastomer but not a thermoplastic elastomer. The latter three materials gave Compositions B, C and D in Table II, and are included for comparison purposes only, and are not part of the invention.

### TABLE II

|  | A | B | C | D |
|---|---|---|---|---|
| TPE | 19.0 | – | – | – |
| SIS Polymer[a] | – | 19.0 | – | – |
| SEBS Polymer[b] | – | – | 19.0 | – |
| EP Rubber[c] | – | – | – | 19.0 |
| Resin[d] | 47.2 | 47.2 | 47.2 | 47.2 |
| Oil[d] | 13.1 | 13.1 | 13.1 | 13.1 |
| Amorphous Polypropylene[d] | 19.7 | 19.7 | 19.7 | 19.7 |
| Antioxidant[d] | 1.0 | 1.0 | 1.0 | 1.0 |

Compositions given in percent by weight.

a. Styrene-isoprene-styrene thermoplastic rubber (Kraton[(R)] D-1107)

-13-                    0178062

b.  Styrene-ethylene-butylene-styrene thermoplastic
    rubber (Kraton G-1652).
c.  Ethylene-propylene copolymer, 55% ethylene, ML-4
    at 100°C = 60.
d.  Same as in Example 1.

Peel Strength, lbs.                45    23    9    16
Shear Strength
    Hours                          24    22    22   0.5
    Percent Slippage               0     82    33   100

The recipes shown in Table II were mixed on a heated mill at 175°C for 10 minutes, and applied with a spatula as thin films on Mylar sheet, all as described in the above Example 1. Sample preparation and testing were also done as in Example 1, and the results are shown in Table II.

This Example illustrates the unexpectedly superior results achieved by this invention over composition known to the art. The ethylene-propylene thermoplastic elastomer when used in recipes and procedure similar to other thermoplastic elastomers, or ethylene propylene non-thermoplastic rubber, gave the highest peel strength and also the best resistance to shear. It is especially surprising that the ethylene-propylene thermoplastic elastomer provides improved high strength to the total hot melt pressure sensitive blend.

EXAMPLE 3

This example illustrates the use of a particulate filler in the composition of this invention.

On a heated two-roll mill were mixed together at 175°C for 10 minutes the ingredients shown in Table III. The resin tackifier in this case was a synthetic polyterpene type having a ring-and-ball softening point of 100± 5°C and a specific gravity of 0.93. The filler was Franklin Fiber, a reprocessed gypsum (calcium sulfate anhydrite) having a specific gravity of 3.0. The thermoplastic elastomer (TPE) in this example was of the ethylene-propylene type described above.

Sample preparation and testing was as described in Example 1, with the exception that in the shear test samples, the Mylar film, having been coated with adhesive and conditioned at room temperature, was applied to a standard stainless steel test panel, as supplied by the Pressure Sensitive Tape Council, with an overlap of 1 inch by 1 inch thick (2.54 cm x 2.54 cm).

TABLE III

|  | A | B |
|---|---|---|
| TPE | 16.5 | 16.5 |
| Tackifier Resin | 49.5 | 49.5 |
| Oil[a] | 13.2 | 13.2 |
| Amorphous Polypropylene[a] | 19.8 | 19.8 |
| Antioxidant[a] | 1.0 | 1.0 |
| Franklin Fiber | --- | 33 |

| TPE | Ethylene/propylene = 23/77 (weight) Flex. modules at R.T. = 7300 psi (50.3 MPa) Elongation = 610%; melting point = 164°C. Raman and infrared spectra within range described above. |
|---|---|
| Tackifier | Synthetic polyterpene resin; Softening point (ring and ball) = 100±5°C Specific gravity = 0.93 |
| Franklin Fiber (Filler) | Calcium sulfate whisker fiber; Specific gravity = 3.0 |

a.  Same as in Example 1.

Composition of the unfilled adhesive given in per cent weight, and amount of filler given in parts per hundred parts of adhesive, by weight.

|  | A | B |
|---|---|---|
| Peel Strength, lbs | 30 | 21 |
| Shear Strength Hours | 24 | 24 |
| Percent Slippage | 0 | 0 |

The results in Table II show that inclusion of filler resulted in a 30% decrease in the force required to peel apart two Mylar films bonded with the adhesive, but there was no change in the 24-hour shear test under a 1 kg load. Such results are typical but not universal. Other instances have been observed wherein the peel strength remains unchanged or even increases when filler is added to the adhesive.

EXAMPLE 4

Following essentially the procedure of Example 1, the following ingredients were blended at 175°C (all in parts by weight).

| | |
|---|---|
| TPR[1] | 19.0 |
| Tackifier[2] | 47.2 |
| Amorphous polypropylene[3] | 19.6 |
| Extender Oil[4] | 13.1 |
| Antioxidant[5] | 1.1 |

Properties

| | |
|---|---|
| Peel Strength, lbs. at R.T. | 5.0 |
| Shear Strength after 5.5 hours | 100% slippage |
| Tack (rolling ball) | 10.7 in. |

(1) Partially cured blend of 80 parts EPDM, 20 parts crystalline polypropylene and 20 parts extender oil; tensile strength = 500psi, elongation = 200%; hardness, Shore A = 65; 100% elongation set = 15%. Fisher type: U.S. Pat. Re 30,405.

(2) Petroleum hydrocarbon resin; softening point (ring and ball) = 91°- 97°C; specific gravity = 0.96.

(3) (4) and (5): As in Example 1.

The data illustrate that blends of crystalline polypropylene with EPDM may be used as a base for adhesive compositions of this invention.

Although the invention has been described in considerable detail with particular reference to certain preferred embodiments thereof, variations and modifications can be effected within the spirit and scope of the invention.

1                                                              0178062

CLAIMS:

1. A hot melt, pressure sensitive adhesive composition characterised in that it comprises:

   a) an ethylene-propylene thermoplastic elastomer consisting essentially of crystalline polypropylene sequences and essentially amorphous elastomeric ethylene-propylene sequences; and

   b) a tackifier.

2. A hot melt, pressure sensitive adhesive composition characterised in that it comprises:

   a) from about 5 to about 85 per cent by weight based on the total weight of the adhesive composition of an ethylene-propylene thermoplastic elastomer consisting essentially of crystalline polypropylene sequences and essentially amorphous elastomeric ethylene-propylene sequences; and

   b) from about 5 to about 85 per cent by weight based on the total weight of the adhesive composition of a tackifier.

3. A composition according to claim 1 or claim 2 characterised in that the composition additionally contains a plasticizer.

4. A composition according to claim 3 characterised in that the plasticizer is present from about 5 to about 50 per cent by weight based on the total weight of the adhesive composition.

5. A composition according to any one of the preceding claims characterised in that the composition additionally contains from about 5 to about 150 parts by weight per 100 parts of total unfilled adhesive composition of a filler.

6. A composition according to any of the preceding claims characterised in that the tackifier is selected from natural or synthetic polyterpenes, hydrocarbon or modified hydrocarbon resins based on $C_5$-$C_9$ petroleum fractions, and

2                                          0178062

mixtures thereof.

7. A composition according to any of the preceding claims characterised in that said thermoplastic elastomer has a melting point of at least 150°C as measured by differential thermal analysis.

8. A composition according to any of the preceding claims characterised in that said ethylene-propylene polymer is such that the ratio of the absorption intensity in the infrared spectrum of the band at 11.88 microns to the band at 12.18 microns is more than 7.0; the ratio of the intensity in the Raman spectrum of the band at 810 $cm^{-1}$ to the band at 840 $cm^{-1}$ is more than 1.0; the ratio of the intensity in the Raman spectrum of the band at 2880 $cm^{-1}$ to the band at 2850 $cm^{-1}$ is more than 2.0.